# EUROPÄISCHE PATENTSCHRIFT

(11) **EP 1 371 121 B1**
(45) Veröffentlichungstag und Bekanntmachung des Hinweises auf die Patenterteilung: **09.02.2005**
(21) Anmeldenummer: 02724105.8
(22) Anmeldetag: 11.03.2002
(51) Int. Cl.: H02B 13/025

(54) **ELEKTRISCHE ANLAGE MIT DRUCKENTLASTUNGSKANAL**
ELECTRICAL INSTALLATION COMPRISING A DECOMPRESSION CHANNEL
INSTALLATION ELECTRIQUE MUNIE D'UN CANAL DE DECOMPRESSION

(30) Priorität: 20.03.2001 DE 10114742
(43) Veröffentlichungstag der Anmeldung: 17.12.2003
(73) Patentinhaber: SIEMENS AKTIENGESELLSCHAFT, 80333 München (DE)
(72) Erfinder: EISELT, Martin, 63584 Gründau (DE); MAHN, Gildo, 63589 Linsengericht (DE); MILBICH, Achim, 68753 Waghäusel (DE)
(86) Internationale Anmeldenummer: PCT/DE2002/000933
(87) Internationale Veröffentlichungsnummer: WO 2002/075884

(56) Entgegenhaltungen:
- DE-U- 9 102 514

## Beschreibung

Die Erfindung betrifft eine elektrische Anlage, insbesondere eine Mittelspannungsschaltanlage, entsprechend dem Oberbegriff des Anspruchs 1.

Eine derartige elektrische Anlage ist aus der DE-U-91 02 514 bereits bekannt.

Zum Personen- und Anlagenschutz werden bei Mittelspannungsschaltanlagen Vorrichtungen zur Druckentlastung vorgesehen, um die im Falle eines Lichtbogenüberschlages entstehenden heißen Gase gefahrlos aus dem Anlagenbereich abführen zu können. Üblicherweise werden für diese Schaltanlagen eine Anzahl von Funktionsmodulen eingesetzt, die gegeneinander und gegen die Atmosphäre solchermaßen gekapselt sind, dass die Auswirkungen einer Explosion im Inneren des Funktionsmoduls nicht auf den die Anlage umgebenden Raum übergreifen können. Im Falle des Auftretens eines Lichtbogens in einem dieser Funktionsmodule müssen der durch die plötzliche Erwärmung der Luft entstehende Überdruck sowie die heißen Gase derart abgeführt werden, dass weder dem Menschen noch der Anlage ein Schaden entstehen kann. Üblicherweise sieht man zu diesem Zweck Druckentlastungskanäle vor, die über ein geeignetes Ventilsystem so mit den einzelnen Funktionsmodulen verbunden sind, dass zwar eine Abfuhr des Überdrucks und der heißen Gase aus dem betroffenen Funktionsmodul möglich ist, aber kein Eindringen der heißen Gase oder einer Druckwelle in die übrigen Funktionsmodule stattfinden kann.

In der DE 31 25 364 A1 wird ein im Querschnitt rechteckiger Druckentlastungskanal beschrieben, in dessen Innerem die heißen Gase zunächst durch Verwirbelung abgekühlt werden und der Überdruck abgebaut wird. Danach werden die Gase über Lüftungsschlitze so aus der Anlage abgeführt, dass sie im Weiteren nur noch einen geringen Schaden anrichten können.

In der DE 195 20 698 A1 und der DE 196 45 304 Cl erfolgt der Druck- und Temperaturabbau mit sogenannten Dämpfelementen in Patronenbauweise, die entweder innerhalb der Anlage oder extern installiert werden. Eine Ableitung der Gase erfolgt hier entweder über Lüftungsschlitze in den Raum des die Anlage umgebenden Gebäudes hinein oder über ein Kaminsystem nach draußen.

Bei allen genannten Lösungen kann es allerdings vorkommen, dass der Druckentlastungskanal mit,rechteckigem Querschnitt den Belastungen bei besonders intensiven Lichtbogenüberschlägen nicht gewachsen ist.

Der Erfindung liegt die Aufgabe zugrunde, zum einen die bei einer Lichtbogenentladuhg auftretenden hohen Drücke und Temperaturen sicher für Mensch und Anlage abzuführen und zum anderen eine ausreichende Stabilität auch für den Fall intensiver Lichtbogenentladungen und deren Auswirkungen zu gewährleisten.

Diese Aufgabe wird durch die Merkmale des Anspruchs 1 gelöst. Schräg bedeutet hierbei jede Abweichung vom rechten Winkel im Vergleich zur Strömungsrichtung mit der Folge, dass das Gas nicht genau gerade reflektiert wird.

Die mit der Erfindung erzielten Vorteile bestehen zum einen darin, dass die beschriebene Querschnittsform eine größere statische Stabilität aufweist als die rechteckige Querschnittsform, da sich die beschriebene Querschnittsform einer für die Stabilität optimalen runden Querschnittsform beliebig weit annähert. Optimale Stabilität wird erreicht, indem der Querschnitt möglichst wenige gerade Flächenbereiche, die zum Durchbiegen neigen können, aufweist. Zum anderen besteht der Vorteil der erfindungsgemäßen Ausführung darin, dass die in den Druckentlastungskanal durch die Eintrittsöffnung eintretende Druckwelle an der der Eintrittsöffnung gegenüberliegenden Deckfläche durch Reflexion in verschiedene Richtungen gestreut wird. Auf diese Weise können extreme Druckspitzen durch Überlagerung mit anderen Druckwellen weitgehend ausgeschlossen werden.

Eine vorteilhafte Ausgestaltung der Erfindung sieht vor, dass der Druckentlastungskanal ein trapezähnliches Querschnittsprofil aufweist. Die Ausgestaltung der Querschnittsfläche in trapezähnlicher Form gewährleistet zum einen eine hohe Stabilität und ermöglicht zum anderen eine einfache Fertigung.

Eine weitere vorteilhafte Ausgestaltung der Erfindung sieht vor, dass der Druckentlastungskanal an seinen Endbereichen abgeschrägt ist. Dadurch wird eine Streuung der sich in Längsrichtung des Druckentlastungskanals ausbreitenden Druckwelle erzielt und die Druckspitzen entschärft.

Eine weitere vorteilhafte Ausgestaltung der Erfindung besteht darin, dass die Dachfläche des Druckentlastungskanals annähernd gegenüber der Einströmöffnung zur Einströmrichtung mindestens eine schräge Fläche aufweist.

Auf diese Weise kann die in den Druckentlastungskanal durch die Einströmöffnung eintretende Druckwelle gleich zu Beginn zerstreut und damit abgeschwächt werden.

Eine weitere vorteilhafte Ausgestaltung der Erfindung sieht vor, dass der Druckentlastungskanal eine Druckentspannungsöffnung zum Außenraum der Anlage aufweist. Die Druckwelle und die entstandenen Gase werden in diesem Fall entweder in einen druck- und temperaturfesten Raum abgeführt, in dem sich keine Menschen aufhalten, oder über ein Kaminsystem nach draußen geleitet. Auf diese Weise wird eine sichere Ableitung gewährleistet, ohne dass Anlage oder Menschen gefährdet werden.

Eine weitere vorteilhafte Ausgestaltung der Erfindung ist so beschaffen, dass der Druckentlastungskanal über ein Absorptionselement mit dem Außenraum der Anlage verbunden ist. Durch das Absorptionselement werden sowohl Temperatur als auch Druck in dem Maße verringert, dass eine Ableitung der Gase sowohl in einen druck- und temperaturfesten Raum oder über ein Kaminsystem nach draußen als auch in den die Anlage direkt umgebenden Raum abgeführt werden können.

Eine weitere vorteilhafte Ausgestaltung der Anlage sieht vor, dass der Druckentlastungskanal an seiner Dachfläche Lüftungsöffnungen aufweist, die sich im Fall eines im Druckentlastungskanal auftretenden Druckstoßes druckdicht verschließen. Damit ist für den Normalbetrieb der Anlage eine ausreichende Kühlluftabfuhr aus der Anlage gewährleistet. Im Falle eines Lichtbogenüberschlages mit Auftreten heißer Gase und hoher Drucke schließen sich die Lüftungsöffnungen durch Klappen und verhindern das Austreten der Gase in den die Anlage umgebenden Raum.

Die Erfindung wird durch in drei Figuren dargestellte Ausführungsbeispiele näher erläutert. Sie wird im Folgenden näher beschrieben.

Es zeigen
- Figur 1: eine Ansicht des Querschnittes durch ein Funktionsmodul mit aufgesetztem Druckentlastungskanal mit trapezähnlichem Querschnitt,
- Figur 2: eine Ansicht mehrerer aneinandergrenzender Funktionsmodule mit gemeinsamem Druckentlastungskanal und
- Figur 3: eine Ansicht des Querschnitts durch einen Druckentlastungskanal mit trapezähnlichem Querschnitt.

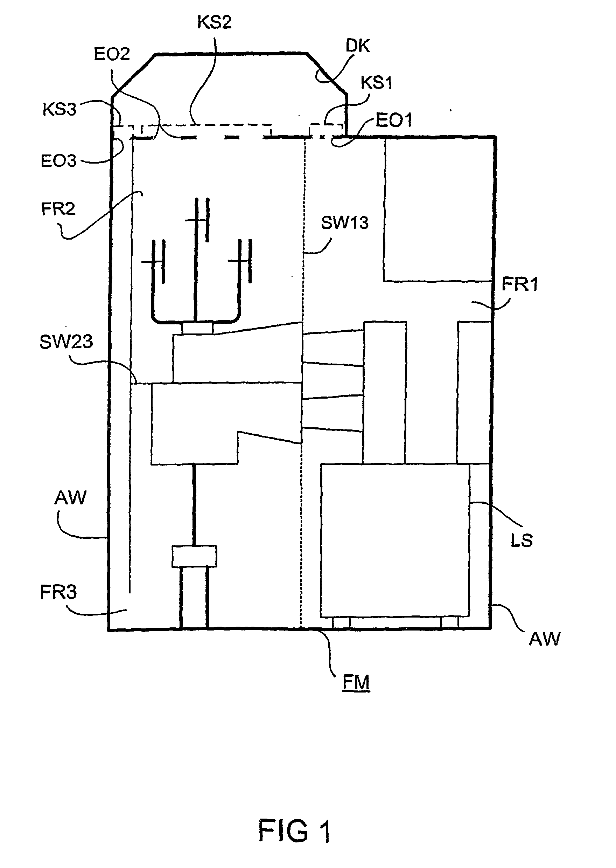

Das in Figur 1 dargestellte Funktionsmodul FM ist in mehrere Funktionsräume FR 1,2,3 aufgeteilt. Diese sind durch Schottwände SW 13,23 gasdurchlässig voneinander getrennt. In anderen Ausführungen können die Schottwände SW... die einzelnen Funktionsräume FR... auch druckdicht voneinander trennen. Bei den einzelnen Funktionsräümen FR... kann es sich beispielsweise um Schaltmodulräume FR 1 mit Leistungsschaltern LS, um Anschlussräume FR 3 oder um Sammelschienenräume FR 2 handeln. Die Außenwände AW des dargestellten Funktionsmoduls FM sind sowohl gegen den die Anlage umgebenden Raum als auch gegen möglicherweise angrenzende weitere Funktionsmodule FM... druckdicht abgeschlossen. In dem dargestellten Ausführungsbeispiel befinden sich die Eintrittsöffnungen EO 1,2,3 zum Druckentlastungskanal DK an der Oberseite des Funktionsmoduls FM. Dabei weist jeder Funktionsraum FR 1,2,3 eine eigene Verbindung zum Druckentlastungskanal DK auf, so dass eine Störung in einem der Funktionsräume FR 1,2,3 keine Auswirkungen auf die übrigen Funktionsräume FR 1,2,3 hat. Die Eintrittsöffnungen EO 1,2,3 zum Druckentlastungskanal DK werden im dargestellten Ausführungsbeispiel durch Klappensysteme KS 1,2,3 mit Rückschlagventil-Funktion solchermaßen verschlossen, dass eine Gasströmung nur aus dem Funktionsmodul FM heraus, nicht aber von dem Druckentlastungskanal DK in das Funktionsmodul FM hinein stattfinden kann.

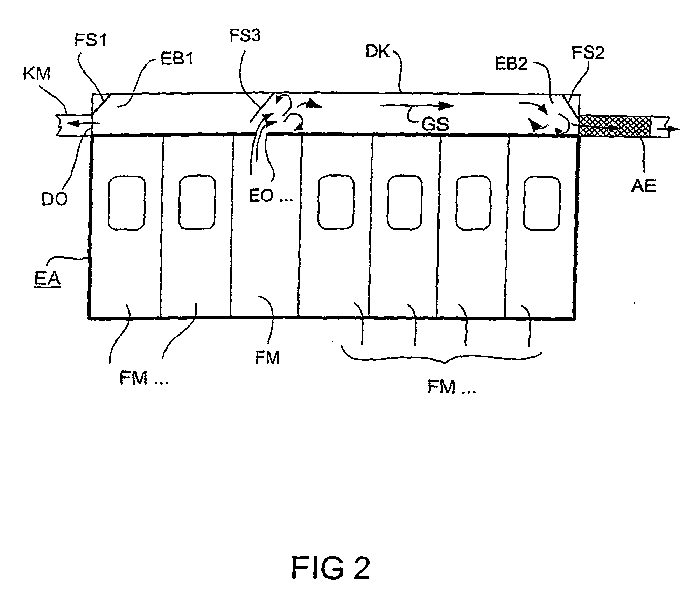

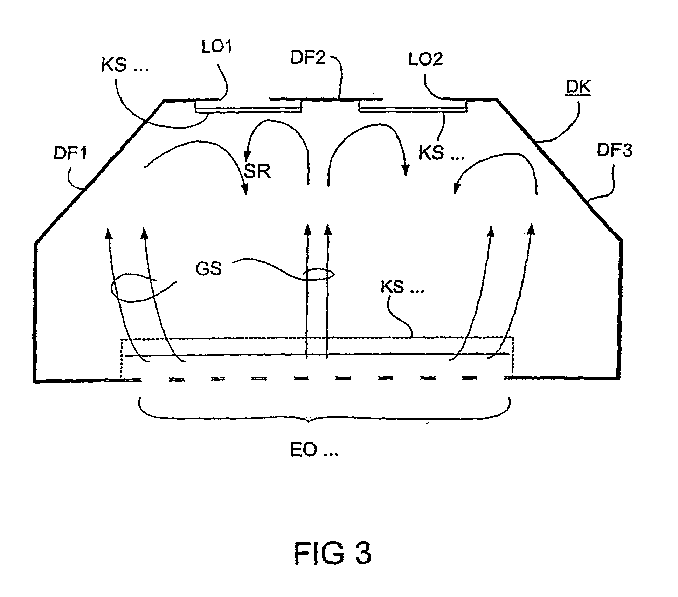

Figur 2 zeigt schematisch in einem Längsschnitt mehrere aneinandergrenzende Funktionsmodule FM, FM... mit gemeinsamem Druckentlastungskanal DK in Längsrichtung. Tritt nun in einem Funktionsmodul FM ein Lichtbogenüberschlag auf, so wird der in diesem Funktionsmodul FM befindlichen Luft eine hohe Wärmemenge zugeführt, so dass sie sich explosionsartig ausdehnt. Die entstehende Druckwelle kann nun über das Klappensystem KS 1,2,3 (in Fig. 1) in den Druckentlastungskanal DK hinein abgeleitet werden, kann aber wegen der Rückschlagventil-Funktion des Klappensystems KS 1,2,3 nicht auf andere Funktionsmodule FM... übergreifen. An den Dachflächen DF 1,2,3 (in Fig. 3) gegenüber den Eintrittsöffnungen EO... im Druckentlastungskanal DK wird die Druckwelle in mehrere Richtungen zerstreut und der Maximaldruck somit abgebaut. Dieser Vorgang findet während der Ausbreitung der Druckwelle in Längsrichtung des Druckkanals DK mehrere Male statt, so dass die Druckspitze sicher abgebaut werden kann. Außerdem sind in Längsrichtung schräge Flächen FS 1,2,3 über den an jedem einzelnen Funktionsmodul FM, FM... vorhandenen Einströmöffnungen EO... und an den Endbereichen EB1,2 des Druckentlastungskanals DK dargestellt, die eine weitere Streuung der Druckwelle und somit einen Abbau der Druckspitzen bewirken. Durch die Verwirbelung der Gase im Druckentlastungskanal DK nimmt neben dem Druck auch die Temperatur entscheidend ab. Zur endgültigen Abführung der Gase kann der Druckentlastungskanal DK an ein Kaminsystem KM angeschlossen sein oder mit einem Absorptionselement AE gekoppelt werden, in dem eine Verringerung von Druck und Temperatur soweit stattfindet, dass die Gase gefahrlos an den die Anlage umgebenden Raum abgeführt werden können. Absorptionselemente AE bestehen üblicherweise aus mit einem Füllmaterial, beispielsweise Metallspänen, gefüllten Kammern, in denen eine starke Streuung, Verwirbelung, Abkühlung und Neutralisierung der Gase stattfindet. Die Wärmeabfuhr findet durch Wärmeleitung und möglicherweise auch Schmelzvorgänge des Füllmaterials statt. Statt des losen Füllmaterials können auch zueinander versetzt angeordnete Bleche verwendet werden, an denen die Strömung gekühlt und verwirbelt wird, wobei die Bleche auch verteilte Öffnungen aufweisen können. Weiterhin sind auch die Pfeile ein möglicher Verlauf der Gasströmung GS im Druckentlastungskanal DK angedeutet. Man erkennt besonders die Verwirbelungsgebiete an den abgeschrägten Flächen FS 2,3.

In Figur 3 ist eine vergrößerte Darstellung des Druckentlastungskanals DK mit trapezähnlichem Querschnitt als ein Ausführungsbeispiel der Erfindung dargestellt. Außer trapezähnlichen Querschnitten können erfindungsgemäß auch beispielweise halbkreisförmige Querschnitte oder verschiedene Polygonformen vorgesehen werden.

Man erkennt die Eintrittsöffnungen EO... mit den Klappensystemen KS. Dabei handelt es sich beispielsweise um lose auf den Eintrittsöffnungen EO... aufliegende Klappen, die von der Druckwelle geöffnet werden und so die Gasströmung GS in den Druckentlastungskanal DK stattfinden kann. Den Eintrittsöffnungen EO... liegen teilweise schräge Deckflächen DF 1,2,3 gegenüber, an der die eintretenden heißen Gase in verschiedene Richtungen reflektiert und damit zerstreut werden, so dass ein Abbau der Druckspitzen stattfinden kann. Ein durch Verwirbelung möglicher Verlauf der Strömungsrichtungen SR des Gases ist eingezeichnet. Weiterhin dargestellt sind die an der Deckfläche DF 1,2,3 des Druckentlastungskanals DK vorhandene Lüftungsöffnungen LO 1,2 die im Falle eines Druckstoßes im Druckentlastungskanal DK über das Klappensystem KS... druckdicht verschlossen werden.

## Patentansprüche

1. Elektrische Anlage (EA), insbesondere Mittelspannungsschaltanlage, mit zumindest einem gekapselten Funktionsmodul (FM) und daran angeschlossenem Druckentlastungskanal (DK) sowie mit wenigstens einer Einströmöffnung (EO...), die das Funktionsmodul (FM) mit dem Druckentlastungskanal (DK) verbindet, wobei die der Einströmöffnung (EO...) gegenüberliegende Dachfläche (DF 1,2,3) des Druckentlastungskanals (DK) wenigstens einen Teilbereich aufweist, der schräg zur Einströmrichtung ausgerichtet ist,
**dadurch gekennzeichnet, dass**
der Druckentlastungskanal (DK) an seiner Dachfläche (DF 1,2,3) Lüftungsöffnungen (LO 1,2) aufweist, die sich im Fall eines im Druckentlastungskanal (DK) auftretenden Druckstoßes druckdicht verschließen.

2. Elektrische Anlage nach Anspruch 1,
**dadurch gekennzeichnet, dass**
der Druckentlastungskanal (DK) ein trapezähnliches Querschnittsprofil aufweist.

3. Elektrische Anlage nach einem der Ansprüche 1 und 2,
**dadurch gekennzeichnet, dass**
der Druckentlastungskanal (DK) an seinen Endbereichen (EB 1,2) abgeschrägt ist.

4. Elektrische Anlage nach einem der Ansprüche 1 bis 3,
**dadurch gekennzeichnet, dass**
die Dachfläche (DF 1,2,3) des Druckentlastungskanals (DK) annähernd gegenüber der Einströmöffnung (EO...) zur Einströmrichtung mindestens eine schräge Fläche (FS...) aufweist.

5. Elektrische Anlage nach einem der vorhergehenden Ansprüche 1 bis 4,
**dadurch gekennzeichnet, dass**
der Druckentlastungskanal (DK)eine Druckentspannungsöffnung (DO)zum Außenraum der Anlage aufweist.

6. Elektrische Anlage nach einem der vorhergehenden Ansprüche 1 bis 4,
**dadurch gekennzeichnet, dass**
der Druckentlastungskanal (DK) über ein Absorptionselement (AE) mit dem Außenraum der Anlage verbunden ist.

## Claims

1. Electrical installation (EA), in particular a medium-voltage switchgear assembly, having at least one encapsulated functional module (FM) and a pressure release duct (DK) connected thereto as well as having at least one inflow opening (EO...) which connects the functional module (FM) to the pressure release duct (DK), the top surface (DF 1, 2, 3), which is opposite the inflow opening (EO...), of the pressure release duct (DK) having at least one subarea which is aligned obliquely with respect to the inflow direction, **characterized in that** the pressure release duct (DK) has ventilation openings (LO 1, 2) on its top surface (DF 1, 2, 3), which close in a pressure-tight manner in the event of a pressure surge occurring in the pressure release duct (DK).

2. Electrical installation according to Claim 1, **characterized in that** the pressure release duct (DK) has a trapezoidal cross-sectional profile.

3. Electrical installation according to one of Claims 1 and 2, **characterized in that** the pressure release duct (DK) has sloping end regions (EB 1, 2).

4. Electrical installation according to one of Claims 1 to 3, **characterized in that** the top surface (DF 1, 2, 3) of the pressure release duct (DK) has at least one sloping surface (FS...) approximately opposite the inflow opening (EO...) in the inflow direction.

5. Electrical installation according to one of the preceding Claims 1 to 4, **characterized in that** the pressure release duct (DK) has a pressure release opening (DO) to the exterior of the installation.

6. Electrical installation according to one of the preceding Claims 1 to 4, **characterized in that** the pressure release duct (DK) is connected to the exterior of the installation via an absorption element (AE).

## Revendications

1. Installation (EA) électrique, notamment installation de commutation en moyenne tension, comprenant au moins un module (FM) fonctionnel encapsulé et un canal (DK) de détente de la pression qui y est raccordé, ainsi qu'au moins une ouverture (EO...) d'entrée qui met le module (FM) fonctionnel en communication avec le canal (DK) de détente de la pression, la surface (DF 1, 2, 3) de toit, opposée à l'ouverture (EO... ) d'entrée, du canal (DK) de détente de la pression ayant au moins une sous-zone qui est inclinée par rapport à la direction d'entrée,
**caractérisée en ce que** la surface (DF 1, 2, 3) de toit du canal (DK) de détente de la pression a des ouïes (LO 1, 2) d'aération qui se ferment d'une manière étanche à la pression s'il se produit un coup de bélier dans le canal (DK) de détente de la pression.

2. Installation électrique suivant la revendication 1,
**caractérisée en ce que** le canal (DK) de détente de la pression a un profil de section transversale semblable à un trapèze.

3. Installation électrique suivant l'une des revendications 1 et 2,
**caractérisée en ce que** les tronçons (EB 1, 2) d'extrémité du canal (DK) de détente de la pression sont biseautés.

4. Installation électrique suivant l'une des revendications 1 à 3,
**caractérisée en ce que** la surface (DF 1, 2, 3) de toit du canal (DK) de détente de la pression a à peu près en face de l'ouverture (EO...) d'entrée au moins une surface (FS...) inclinée par rapport à la direction d'entrée.

5. Installation électrique suivant l'une des revendications précédentes 1 à 4,
**caractérisée en ce que** le canal (DK) de détente de la pression a une ouverture (DO) de détente de la pression débouchant à l'extérieur de l'installation.

6. Installation électrique suivant l'une des revendications précédentes 1 à 4,
**caractérisée en ce que** le canal (DK) de détente de la pression communique avec l'extérieur de l'installation par un élément (AE) d'absorption.
